(19) Europäisches Patentamt
European Patent Office
Office européen des brevets

(11) Veröffentlichungsnummer: **0 291 699 B1**

(12) **EUROPÄISCHE PATENTSCHRIFT**

(45) Veröffentlichungstag der Patentschrift: **01.07.92**

(51) Int. Cl.⁵: **C08G 18/64**, H01B 3/30, C08G 18/80

(21) Anmeldenummer: **88106120.4**

(22) Anmeldetag: **18.04.88**

# (54) Lackbindemittel, ihre Verwendung in Beschichtungsmitteln und ein Verfahren zur Herstellung von Drahtlackierungen.

(30) Priorität: **28.04.87 DE 3714033**

(43) Veröffentlichungstag der Anmeldung:
**23.11.88 Patentblatt 88/47**

(45) Bekanntmachung des Hinweises auf die Patenterteilung:
**01.07.92 Patentblatt 92/27**

(84) Benannte Vertragsstaaten:
**AT CH DE ES FR GB IT LI NL SE**

(56) Entgegenhaltungen:
**EP-A- 0 005 230**
**DE-A- 1 795 752**
**US-A- 4 332 925**

(73) Patentinhaber: **BAYER AG**

**W-5090 Leverkusen 1 Bayerwerk(DE)**

(72) Erfinder: **Dünwald, Willi, Dr.**
**Geschwister-Scholl-Strasse 16**
**W-5090 Leverkusen(DE)**
Erfinder: **Schlegel, Hans**
**Habichtgasse 4**
**W-5090 Leverkusen(DE)**
Erfinder: **Halpaap, Reinhard, Dr.**
**Kleinfeldchensweg 37b**
**W-5000 Köln 91(DE)**
Erfinder: **Pedain, Josef, Dr.**
**Haferkamp 6**
**W-5000 Köln 80(DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).



Rank Xerox (UK) Business Services

## Beschreibung

Die Erfindung betrifft neue, hochmolekulare Polyamid-imide und spezielle Polyisocyanate mit blockierten Isocyanatgruppen enthaltende Lackbindemittel, deren Verwendung in Beschichtungsmitteln für hitzeresistente Substrate und ein Verfahren zur Herstellung von Drahtlackierungen unter Verwendung von diese Bindemittel enthaltenden Beschichtungsmitteln.

Es ist bereits bekannt, hochmolekulare Polyamid-imide für die Herstellung hochwärmebeständiger Filme und Überzüge, insbesondere zur Drahtlackierung zu verwenden (vgl. z.B. DE-AS 1 256 418, FR-PS 1 375 461, US-PS 3 541 038 oder US-PS 3 625 911). Diese, im allgemeinen durch Umsetzung von Trimellitsäureanhydrid mit Diisocyanaten erhaltenen Polyamid-imide sind jedoch mit dem Nachteil behaftet, daß sie nur in stark polaren, im allgemeinen sehr teueren Lösungsmitteln wie z.B. N-Methyl-pyrrolidon, Dimethylformamid oder Dimethylacetamid löslich sind. Es hat daher nicht an Versuchen gefehlt, die Polyamid-imide so zu modifizieren, daß auch eine Verarbeitbarkeit in anderen Lösungsmitteln, beispielsweise in Kresolen möglich wird. Eine derartige Modifizierung der Polyamid-imide gelingt durch Mitverwendung von Lactamen, insbesondere von $\epsilon$-Caprolactam bei ihrer Herstellung. Derartige Lactame in eingebauter Form enthaltende Polyamid-imide sind beispielsweise in der DE-AS 1 795 752 beschrieben. Die Polyamid-imide dieser Vorveröffentlichung weisen zwar eine sehr gute Löslichkeit in den bei der Drahtlackierungen üblicherweise eingesetzten, phenolischen Lösungsmitteln auf, sie sind jedoch mit dem Nachteil behaftet, daß die bei der Drahtlackierung resultierenden Lackfilme bezüglich ihrer mechanischen und thermischen Eigenschaften entsprechenden Lackfilmen auf Basis analoger, jedoch "Lactam-freier" Polyamid-imide unterlegen sind.

Wie jetzt überraschenderweise gefunden wurde, gelingt es, diesen Qualitätsnachteil der Polyamid-imide gemäß DE-AS 1 795 752 nahezu zu beseitigen, wenn die Polyamid-imide in Kombination mit bestimmten, Carbodiimid-und/oder Uretonimingruppen, sowie blockierte Isocyanatgruppen aufweisenden organischen Verbindungen kombiniert zur Anwendung gelangen.

Gegenstand der Erfindung sind somit zur Herstellung von hochwärmebeständigen Filmen und Überzügen geeignete, Polyamid-imide enthaltende Lackbindemittel, dadurch gekennzeichnet, daß sie Gemische aus

a) hochmolekularen Verbindungen mit wiederkehrenden Struktureinheiten der allgemeinen Formel

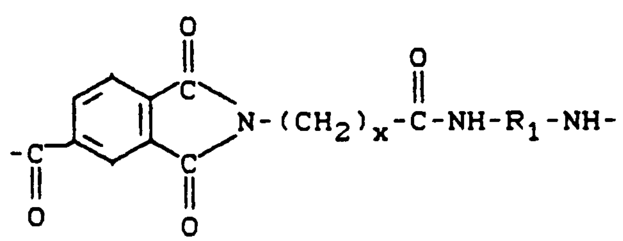

worin

$R_1$ einen Alkylen-, Cycloalkylen- oder einen gegebenenfalls Methylenbrücken aufweisenden Arylenrest bedeutet, wobei diese Reste mit Alkylresten oder Halogen substituiert sein können und

x für eine ganze Zahl von 2 bis 12 steht,

b) (i) Carbodiimid- und/oder Uretonimingruppen und (ii) durch Reaktion mit einem monofunktionellen Blockierungsmittel blockierte Isocyanatgruppen aufweisenden organischen Verbindungen

und gegebenenfalls

c) weiteren Hilfs- und Zusatzmitteln

darstellen, wobei pro 100 Gew.-Teilen der Komponente a) 1 bis 100 Gew.-Teile der Komponente b) vorliegen.

Gegenstand der Erfindung ist auch die Verwendung dieser Bindemittel in Beschichtungsmitteln für hitzeresistente Substrate.

Gegenstand der Erfindung ist auch ein Verfahren zur Herstellung von Drahtlackierungen durch Beschichtung von Drähten mit einem, Bindemittel, inerte Lösungsmittel und gegebenenfalls die aus der Lacktechnologie üblichen Hilfs- und Zusatzmittel enthaltenden, Drahtlack unter anschließender Aushärtung der Beschichtung bei Temperaturen bei oberhalb 80 °C, dadurch gekennzeichnet, daß man solche Beschichtungsmittel verwendet, die als Bindemittel solche der obengenannten Art enthalten.

Bei der Komponente a) der erfindungsgemäßen Bindemittel handelt es sich um hochmolekulare

Polyamid-imide mit wiederkehrenden Struktureinheiten der allgemeinen Formel

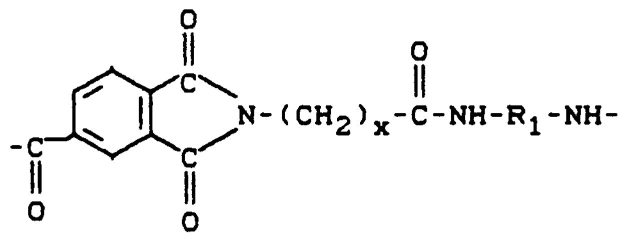

in welcher

$R_1$ und x die bereits obengenannte Bedeutung haben.

Vorzugsweise handelt es sich um solche Polyamid-imide, für welche

- $R_1$ für einen gegebenenfalls Methyl-substituierten und/oder Methylenbrücken aufweisenden aromatischen Kohlenwasserstoffrest mit insgesamt 6 bis 15 Kohlenstoffatomen und
- x für 5 steht.

Die Herstellung dieser Polyamid-imide erfolgt gemäß der Lehre der DE-AS 1 795 752 (= US-PS 3 658 773), wobei als Ausgangsmaterialien zur Herstellung der hochmolekularen Verbindungen neben Trimellithsäureanhydrid Lactame

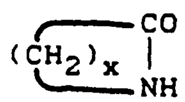 ,

vorzugsweise Caprolactam (x = 5) und (vorzugsweise aromatische) Diisocyanate $R_1(NCO)_2$ zum Einsatz gelangen, wobei $R_1$ und x die obengenannte Bedeutung haben. Besonders bevorzugt werden als Diisocyanate 2,4-Diisocyanatotoluol und/oder 4,4′-Diisocyanatodiphenylmethan verwendet. Es ist grundsätzlich möglich, bei der Herstellung der Polyamid-imide Gemische unterschiedlicher Lactame und/oder Gemische unterschiedlicher Diisocyanate einzusetzen, obwohl dies weniger bevorzugt ist. In einem solchen Falle hätten die Variablen $R_1$ und x eine unterschiedliche, den jeweiligen Einzelkomponenten der eingesetzten Gemische entsprechende, jedoch stets im Rahmen der gemachten Definitionen liegende Bedeutung.

Wie bereits in der DE-AS 1 795 752 ausgeführt, können die mittleren Molekulargewichte der Polyamid-imide durch die Dauer des Erhitzens bei ihrer Herstellung und die Wahl der stöchiometrischen Verhältnisse der Ausgangsmaterialien in weiten Grenzen variiert werden. Im allgemeinen liegt das osmometrisch bestimmbare Molekulargewicht der Polyamid-imide bei mindestens 5.000.

Bei der Komponente b) der erfindungsgemäßen Bindemittel handelt es sich um (i) Carbodiimid- und/oder Uretonimingruppen und (ii) blockierte Isocyanatgruppen aufweisende Verbindungen. Der Gehalt an Carbodiimidgruppen (berechnet als $-N=C=N-$) liegt im allgemeinen bei 0 bis 25 Gew.-%, vorzugsweise bei 1 bis 20 Gew.-%, der Gehalt an Uretonimingruppen (berechnet als Struktureinheiten der Bruttoformel $C_2N_3O$) liegt im allgemeinen bei 0 bis 30 Gew.-%, vorzugsweise bei 0 bis 25 Gew.-%, wobei die Summe aus Carbodiimid- und Uretonimingruppen (formal berechnet als $-N=C=N-$) im allgemeinen bei 0,5 bis 25 Gew.-%, vorzugsweise bei 1 bis 20 Gew.-%, liegt, und der Gehalt an blockierten Isocyanatgruppen (berechnet als NCO) liegt im allgemeinen bei 1 bis 25 Gew.-%, vorzugsweise bei 5 bis 22 Gew.-%.

Die Herstellung dieser Verbindungen kann dadurch erfolgen, daß man die Isocyanatgruppen eines organischen Polyisocyanats zu 10 bis 90 %, vorzugsweise 20 bis 80 % und insbesondere 30 bis 70 %, durch Reaktion mit einem monofunktionellen Blockierungsmittel für Isocyanatgruppen blockiert und anschließend die noch verbleibenden freien Isocyanatgruppen zu 65 bis 100 % unter Kohlendioxidabspaltung in Carbodiimidgruppen überführt. Die in den Verbindungen gegebenenfalls vorliegenden Uretonimingruppen entstehen durch Anlagerung der gegebenenfalls noch vorliegenden freien Isocyanatgruppen an die gebildeten Carbodiimidgrupen. Die Herstellung dieser Verbindungen ist in der deutschen Patentanmeldung DE-OS 3 600 766 im Detail beschrieben, wobei die dort als bevorzugt herausgestellten Ausführungsformen bzw. Ausgangsmaterialien auch im Rahmen der vorliegenden Erfindung bevorzugt sind.

In den erfindungsgemäßen Bindemitteln liegen pro 100 Gew.-Teilen der Komponente a) 1 bis 100, vorzugsweise 5 bis 50 Gew.-Teile der Komponente b) vor. Bei relativ geringen Mengen der Komponente b) werden letztendlich flexible Flächengebilde, d.h. insbesondere Lacküberzüge, erhalten, während mit steigendem Anteil der Komponente b) die Härte und auch die Chemikalienbeständigkeit der Überzüge ansteigt.

In den erfindungsgemäßen Bindemitteln können gegebenenfalls als weitere Komponente c) Hilfs- und Zusatzstoffe vorliegen. Hierzu gehören beispielsweise weitere, blockierte Isocyanatgruppen aufweisende Polyisocyanate, beispielsweise das phenolblockierte, Isocyanuratgruppen aufweisende Trimerisat von 2,4-Diisocyanatotoluol und/oder gegenüber Isocyanatgruppen reaktionsfähige Verbindungen, wie sie bislang bei der Drahtlackierung zum Einsatz gelangten, und wie sie beispielsweise in DE-OS 3 600 766 beschrieben sind. Die Mitverwendung derartiger weiterer Bindemittelkomponenten ist jedoch weniger bevorzugt.

Die erfindungsgemäßen Bindemittel weisen eine gute Löslichkeit in dem bei der Drahtlackierung im allgemeinen zum Einsatz gelangenden Lösungsmitteln auf. Zu diesen Lösungsmitteln gehören insbesondere phenolische Lösungsmittel wie Phenol, Kresole und/oder Xylenole. Desweiteren geeignet sind Glykole wie Ethylenglykol, Propylenglykol, Diglykole wie Diethylenglykol und Dipropylenglykol, Estergruppen ausweisende Lösungsmittel wie Methoxypropylacetat oder Butylacetat oder Ketone wie Methyl-isobutylketon. Auch Verschnittmittel wie Alkylbenzole und deren Mischungen, wie sie unter der Handelsbezeichung "Solventnaphtha" bekannt sind, können bei der Herstellung der Lösungen der Bindemittel vor deren erfindungsgemäßer Verwendung mitverwendet werden. Vorzugsweise werden die erfindungsgemäßen Bindemittel in Form von 15 bis 60, vorzugsweise 20 bis 40 gew.-%igen Lösungen in derartigen Lösungsmitteln bzw. Lösungsmittelgemischen der erfindungsgemäßen Verwendung zugeführt.

Bei der erfindungsgemäßen Verwendung der erfindungsgemäßen Bindemittel können den genannten Bindemittellösungen selbstverständlich die aus der Lacktechnologie üblichen Hilfs- und Zusatzmittel einverleibt werden. Hierzu gehören beispielsweise Katalysatoren, die, falls überhaupt, in einer Menge von 0,01 bis 5, vorzugsweise 0,1 bis 3 Gew.-%, bezogen auf das Gewicht des Bindemittels, mitverwendet werden können. Im allgemeinen reichen jedoch die in den üblichen Einbrennkanälen für Drahtlacke vorherrschenden Temperaturen aus, um die Umsetzung, d.h. die Aushärtung der Lacke auch ohne Zusatz eines Katalysators innerhalb eines ausreichend kurzen Zeitraums zu gewährleisten. Geeignete Katalysatoren sind beispielsweise tert. Amine wie N,N-Dimethylanilin, Anlagerungsprodukte von Aminen an Carbonylverbindungen wie beispielsweise das Anlagerungsprodukt von Anilin an Butyraldehyd oder organische Metallkatalysatoren wie beispielsweise Zinkstearat, Zinn(II)-octoat, Dibutylzinndilaurat, Titantetrabutylat oder Triethanolamin-Titanat.

Die durch Abmischung bei Raumtemperatur aus den genannten erfindungswesentlichen Einzelkomponenten und gegebenenfalls Hilfs- und Zusatzmitteln erhaltenen Gemische bzw. die die erfindungsgemäßen Bindemittel enthaltenden, gebrauchsfertigen Beschichtungsmittel, sind bei Raumtemperatur oder mäßig erhöhter Temperatur (bis ca. 50 ° C) lagerbeständig. Die unter Verwendung der gebrauchsfertigen Beschichtungsmittel hergestellten Flächengebilde werden bei Temperaturen von oberhalb 80 ° C, vorzugsweise 180 bis 700 ° C und insbesondere 200 bis 500 ° C, unter gleichzeitigem Verdampfen der gegebenenfalls vorliegenden flüchtigen Bestandteile (z.B. Lösungsmittel) in vernetzte Kunststoffe überführt.

Bei dieser Vernetzungsreaktion erfolgt eine Vernetzung der weitgehend linearen Polyamid-imide durch Reaktion mit der Polyisocyanatkomponente b), wobei der genaue Mechanismus dieser Vernetzungsreaktion nicht bekannt ist. In diesem Zusammenhang ist insbesondere hervorzuheben, daß, wie eigene Versuche der Anmelderin ergaben, Kombinationen von Polyamid-imiden der Art der Komponente a) mit Carbodiimid- und Uretonimingruppen-freien blockierten Polyisocyanaten, beispielsweise mit dem Phenol-blockierten, Isocyanuratgruppen aufweisenden Trimerisat von 2,4-Diisocyanatotoluol zu weit schlechteren Ergebnissen führen. In der Tat können die eingangs genannten Nachteile der Polyamid-imide durch Mitverwendung von solchen Polyisocyanaten kaum beseitigt werden. Das Vorliegen der Carbodiimid- und/oder Uretonimingruppen in der Komponente b) ist daher von ganz wesentlicher Bedeutung, ohne daß eine Erklärung für diesen überraschenden Befund zur Verfügung steht.

Bei der erfindungsgemäßen Verwendung zur Herstellung von Lackierungen von hitzeresistenten Substraten, insbesondere beim erfindungsgemäßen Verfahren zur Herstellung von Drahtlackierungen können die Bechichtungsmittel nach allen bekannten Methoden der Beschichtungstechnologie auf geeignete Substrate aufgetragen werden, worauf sich eine Aushärtung der Beschichtung innerhalb der obengenannten Temperaturbereiche anschließt. Geeignete Substrate sind beispielsweise Metalle, Keramik, Glasfasern oder -gewebe. Besonders bevorzugte Substrate sind Metalldrähte.

Bei der bevorzugten Drahtlackierung erfolgt die Beschichtung der Drähte nach den an sich bekannten Tauch-, Rollenauftrags- oder Düsenabstreiferverfahren, worauf sich die Trocknung, d.h. die Aushärtung der Lackschichten in den üblichen Trockenöfen innerhalb der genannten Temperaturbereiche anschließt.

Aufgrund der ausgezeichneten elektrischen und mechanischen Eigenschaften der ausgehärteten Flächengebilde eignen sich die erfindungsgemäßen Bindemittel auch zur Herstellung von Isoliergeweben oder zur Imprägnierung von Elektromotoren.

In den nachfolgenden Beispielen beziehen sich alle Prozentangaben auf Gewichtsprozente.

Beispiel 1

Herstellung eines Polyamid-imids (Komponente a)

250 g 4,4'-Diisocyanatodiphenylmethan, 192 g Trimellitsäureanhydrid und 113,2 g ε-Caprolactam werden in 290 g Kresol langsam auf 150 °C erhitzt und bei dieser Temperatur belassen, bis nach etwa 2 Stunden die $CO_2$-Entwicklung abgeklungen ist. Danach wird die Temperatur im Verlauf von ca. 2 Stunden auf 200 °C gesteigert. Bei dieser Temperatur wird 10 Stunden nachgerührt. Durch Zugabe von 2.044,8 g einer Mischung aus gleichen Teilen Kresol/Xylol wird der Festgehalt der Lösung auf 20 % eingestellt.

Herstellung eines blockierten Polyisocyanats mit Carbodiimid- und Uretonimingruppen (Komponente b).

Eine Mischung aus 2.500 g 4,4'-Diisocyanatodiphenylmethan und 1.740 g 2,4-Diisocyanatotoluol und 2,6-Diisocyanatotoluol (Gewichtsverhältnis = 8:2) wird innerhalb 1 Stunde bei 80 °C mit 2.160 g Kresol versetzt und ca. 4 Stunden bei 100 bis 120 °C reagieren gelassen. Nach Erreichen eines NCO-Gehalts von 13,2 % ($NCO_{theror.}$ = 13,1 %) wird mit 2.740 g Glykolmonomethyletheracetat verdünnt.

Man katalysiert die Carbodiimidbildung durch Zugabe von 20 g Methylphospholinoxid (einem technischen Gemisch aus 1-Methyl-1-phospha-2-cyclopenten-1-oxid und 1-Methyl-1-phospha-3-cyclopenten-1-oxid) bei 60 °C. Nach ca. 15 Stunden erreicht die $CO_2$-Entwicklung einen Endwert bei 201 1 (ca. 90 %).

Men erhält die Lösung eines blockierten Isocyanats mit folgenden Kenngrößen:

| | |
|---|---|
| Konzentration: | ca. 70 %ig |
| Viskosität: | $\eta$ (23 °C) = 4.600 mPas |
| freier NCO-Gehalt: | <0,1 % |
| blockierter NCO-Gehalt (berechnet als NCO): | 9,6 % |
| IR: | 2.140 $cm^{-1}$ (Carbodiimid) |
| Carbodiimid-Gehalt (berechnet als -N=C=N-aus $CO_2$-Menge): | 2,9 % |
| Uretonimin-Gehalt (berechnet als $C_2N_3O$): | 2,2 % |

Unter Verwendung der obengenannten Komponente a) werden drei verschiedene Lackansätze gefertigt.

Lack 1 stellt die oben beschriebene Lösung der Komponente a) dar.

Lack 2 setzt sich zusammen aus der oben beschriebenen Lösung der Komponente a), der, berechnet auf Feststoff, 10 % eines blockierten Polyisocyanats und 1 % des Anlagerungsprodukts von 1 Mol Anilin an 1 Mol Butyraldehyd zugesetzt worden sind. Das hier zum Einsatz gelangende Polyisocyanat wurde durch Trimerisierung eines Teils der Isocyanatgruppen von 2,4-Diisocyanatotoluol, destillative Entfernung des nicht umgesetzten 2,4-Diisocyanatotoluol und anschließende Blockierung der Isocyanatgruppen des Trimerisats hergestellt. Der Gehalt an blockierten Isocyantgruppen (berechnet als NCO) liegt bei 14 %.

Lack 3 besteht aus der obengenannten Lösung der Komponente a), der, bezogen auf Feststoff, 10 % der oben beschriebenen Komponente b) und 1 % des genannten Anlagerungsprodukts von Anilin an Butyraldehyd zugesetzt worden sind.

Lack 3 besteht somit aus

| | |
|---|---|
| 909 g | der oben beschriebenen 20 %igen Lösung der Komponente a) |
| 26 g | der oben beschriebenen 70 %igen Lösung der Komponente b) |
| 2 g | des genannten Anlagerungsprodukts von Anilin an Butyraldehyd. |

Diese 3 Lacke werden in 3 Parallelversuchen auf einen Kupferdraht von 0,7 mm Ø aufgetragen. Der Draht durchläuft dabei sechsmal die Lackauftragsvorrichtung. Nach jeder Passage wird der Überschuß des vom Draht mitgenommenen Lackes durch eine entsprechend kalibrierte Abstreiferdüse zurückgehalten. Anschließend passiert der Draht den Einbrennofen, in dem die Lösungsmittel entfernt und das filmbildende Bindemittel vernetzt wird. Der somit in sechs Schichten aufgetragene Überzug weist eine Dicke von 27,5 µm auf, dies bedeutet, daß der Durchmesser des runden Kupferdrahtes durch die Lackschicht um ca. 55 µm zunimmt.

| | |
|---|---|
| Ofenlänge (m): | 4 |
| Ofentemperatur (°C): | 400 |
| Kalibrierung der Abstreiferdüsen (mm): | 0,74, 0,76, 0,78, 0,80, 0,82 und 0,84. |

Im Falle von Lack 1 erhält man nur bis zu einer Lackiergeschwindigkeit von 9 m/min gute Lackdrahteigenschaften. Die Erweichungstemperatur des Lacks liegt bei 300 °C. Der Anstieg der Kurve des dielektrischen Verlustfaktors tanδ (DIN 53 483) erfolgt bei 210 °C.

Im Falle von Lack 2 werden ebenfalls nur bis zu einer Lackiergeschwindigkeit von 9 m/min gute Lackdrahteigenschaften erhalten. Die Erweichungstemperatur liegt in diesem Fall bei 310 °C und der Anstieg des dielektrischen Verlustfaktors tanδ bei 210 °C.

Im Falle von Lack 3 können die zuletzt genannten Eigenschaften selbst bei einer Lackiergeschwindigkeit von 15 m/min erreicht werden. Bei einer Lackiergeschwindigkeit von lediglich 9 m/min erhält man deutlich bessere Werte: der Anstieg des elektrischen Verlustfaktors tanδ erfolgt erst bei 240 °C; die Erweichungstemperatur liegt bei 400 °C.

Beispiel 2

Herstellung einer Polyisocyanatkomponente b)

Zu 5.000 g 4,4'-Diisocyanatodiphenylmethan werden innerhalb von 2 h bei 80 °C 2.160 g Kresol zugetropft, und man läßt bei 120 °C reagieren. nach ca. 4 h wird ein NCO-Gehalt von 11,8 % erreicht ($NCO_{theor.}$ = 11,7 %), und man verdünnt durch Zugabe von 3.070 g Methoxypropylacetat zu einer 70 %igen Lösung mit einem NCO-Gehalt von 8,3 % ($NCO_{theor.}$ = 8,2 %).

Durch Zugabe von 20 g (0,2 %) Methylphospholinoxid (einem technischen Gemisch aus 1-Methyl-1-phospha-2-cyclopenten-1-oxid und 1-Methyl-1-phospha-3-cyclopenten-1-oxid) wird die Carbodiimidbildung bei 60 °C katalysiert und durch Messung der $CO_2$-Entwicklung verfolgt. Nach ca. 12 h kommt die Gasentwicklung bei 220 l $CO_2$ (>90 % der theoretisch maximal zu erwartenden Menge) zum Stillstand. Die berechneten Umsätze bezogen auf die $CO_2$-Entwicklung und die Abnahme des NCO-Gehalts verlaufen parallel.

Man erhält die Lösung eines blockierten Isocyanats mit folgenden Kenndaten:

| | |
|---|---|
| Konzentration: | ca. 70 %ig |
| Viskosität: | $\eta$ (23 °C) = 6.000 mPas |
| freier NCO-Gehalt: | <0,1 % |
| blockierter NCO-Gehalt: | 8,5 % (Analysenmethode: 30 min/180 °C mit Di-n-butyl amin in o-Dichlorbenzol) |

Lackansatz

| | |
|---|---|
| 666,5 g | der Lösung der Komponente a) gemäß Beispiel 1 |
| 95,3 g | der obengenannten 70 %igen Isocyanatlösung b) |
| 2,0 g | des Adduktes Anilin/Butyraldehyd gemäß Beispiel 1. |

Mit dieser Lacklösung wird wie in Beispiel 1 beschrieben ein Kupferlackdraht von 0,7 mm Durchmesser auf eine Durchmesserzunahme von ca. 55 µm lackiert.

Bei der Lackiergeschwindigkeit von 12 m wird eine Erweichungstemperatur von 430 °C erzielt. Der Anstieg des dielektrischen Verlustfaktors tanδ erfolgt bei 280 °C.

Bestimmung des Anstiegs des dielektrischen Verlustfaktors:

Der dielektrische Verlustfaktor tanδ gemäß DIN 53 483 (2.3.) ist ein Maß für die Energieverluste, die dadurch entstehen, daß ein Teil der Energie des elektrischen Feldes zur Erwärmung verbraucht wird.

Vor der Prüfung wird die Drahtprobe mit einer wäßrigen Graphitdispersion überstrichen und 2 Stunden bei etwa 90 °C getrocknet.

Der dielektrische Verlustfaktor wird zwischen Kupferleiter und Graphitüberzug gemessen.

Mißt man diesem Wert in Abhängigkeit von der Temperatur, so erfolgt bei einer bestimmten Temperatur ein Anstieg des gemessenen Wertes. In den vorgenannten Beispielen wird jeweils die Temperatur angegeben, bei welcher dieser Anstieg des gemessenen Wertes beginnt. Die Temperatur ist ein Maß für die Wärmebeständigkeit der Lackschicht.

**Patentansprüche**

**1.** Zur Herstellung von hochwärmebeständigen Filmen und Überzügen geeignete, Polyamid-imide enthaltende Lackbindemittel, dadurch gekennzeichnet, daß sie Gemische aus

a) hochmolekularen Polyamid-imiden mit wiederkehrenden Struktureinheiten der allgemeinen Formel

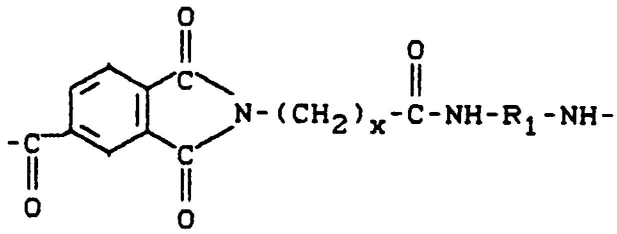

worin

$R_1$ einen Alkylen-, Cycloalkylen- oder einen gegebenenfalls Methylenbrücken aufweisenden Arylenrest bedeutet, wobei diese Reste mit Alkylresten oder Halogen substituiert sein können und

x für eine ganze Zahl von 2 bis 12 steht,

b) (i) Carbodiimid- und/oder Uretonimingruppen und (ii) durch Reaktion mit einem monofunktionellen Blockierungsmittel blockierte Isocyanatgruppen aufweisenden organischen Verbindungen

und gegebenenfalls

c) weiteren Hilfs- und Zusatzmitteln

darstellen, wobei pro 100 Gew.-Teilen der Komponente a) 1 bis 100 Gew.-Teile der Komponente b) vorliegen.

**2.** Lackbindemittel gemäß Anspruch 1, dadurch gekennzeichnet, daß die Komponente a) ein Polyamidimid mit wiederkehrenden Struktureinheiten der in Anspruch 1 genannten allgemeinen Formel darstellt, wobei

$R_1$ für einen gegebenenfalls Methylsubstituenten und/oder Methylenbrücken aufweisenden, zweiwertigen aromatischen Kohlenwasserstoffrest mit insgesamt 6 bis 15 Kohlenstoffatomen steht und

x für die Zahl 5 steht.

**3.** Bindemittel gemäß Anspruch 1 und 2, dadurch gekennzeichnet, daß die Komponente b) 0 bis 25 Gew.-% an Carbodiimidgruppen (berechnet als -N=C=N-) von 0 bis 30 Gew.-%, an Uretonimingruppen (berechnet als Struktureinheiten der Bruttoformel $C_2N_3O$), wobei die Summe aus Carbodiimid- und Uretonimingruppen (formal berechnet als -N=C=N-) bei 0,5 bis 25 Gew.-% liegt, und einen Gehalt an blockierten Isocyanatgruppen (berechnet als NCO) von 1 bis 25 Gew.-% aufweist.

**4.** Verwendung der Bindemittel gemäß Anspruch 1 bis 3 in Beschichtungsmitteln für hitzeresistente Substrate.

**5.** Verwendung gemäß Anspruch 4 in Drahtlacken.

**6.** Verfahren zur Herstellung von Drahtlackierungen durch Beschichtung von Drähten mit einem, Bindemittel, inerte Lösungsmittel und gegebenenfalls die aus der Lacktechnologie üblichen Hilfs- und Zusatzmittel enthaltenden Drahtlack unter anschließender Aushärtung der Beschichtung bei Temperaturen von oberhalb 80 °C, dadurch gekennzeichnet, daß man solche Beschichtungsmittel verwendet, die als Bindemittel solche gemäß Anspruch 1 bis 3 enthalten.

## Claims

**1.** Lacquer binders containing polyamide imides suitable for the production of highly heat-resistant films and coatings, characterized in that they are mixtures of

a) high molecular weight polyamide imides containing recurring structural units corresponding to the following general formula

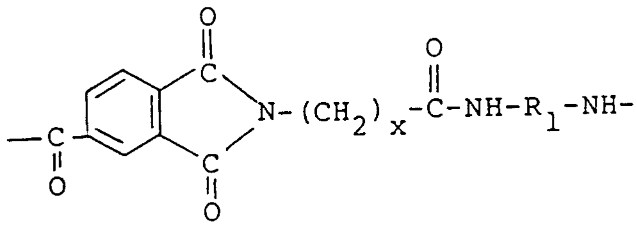

in which

R1 is an alkylene radical, a cycloalkylene radical or an arylene radical optionally containing methylene bridges, these radicals optionally being substituted by alkyl groups or halogen, and

x is an integer of 2 to 12,

b) organic compounds containing (i) carbodiimide and/or uretone imine groups and (ii) isocyanate groups blocked by reaction with monofunctional blocking agents

and, optionally,

c) other auxiliaries and additives,

1 to 100 parts by weight of component b) being used to 100 parts by weight of component a).

**2.** Lacquer binders as claimed in claim 1, characterized in that component a) is a polyamide imide containing recurring structural units corresponding to the general formula in claim 1 in which

$R_1$ is a difunctional $C_{6-15}$ aromatic hydrocarbon radical optionally substituted by methyl groups and/or containing methylene bridges and

x is the number 5.

**3.** Binders as claimed in claims 1 and 2, characterized in that component b) contains 0 to 25% by weight carbodiimide groups (expressed as -N=C=N-), 0 to 30% by weight uretone imine groups (expressed as structural units having the formula $C_2N_3O$), the sum total of carbodiimide and uretone imine groups (formally expressed as -N=C=N-) being 0.5 to 25% by weight, and 1 to 25% by weight blocked isocyanate groups (expressed as NCO).

**4.** The use of the binders claimed in claims 1 to 3 in coating compositions for heat-resistant substrates.

**5.** The use claimed in claim 4 in wire lacquers.

**6.** A process for the production of wire lacquer coatings by coating wires with a wire lacquer containing binders, inert solvents and, optionally, the auxiliaries and additives typically used in lacquer technology with subsequent curing of the coating at temperatures above 80°C, characterized in that coating compositions containing as binders those claimed in claims 1 to 3 are used.

## Revendications

**1.** Liant pour émaux contenant des polyamide-imides et convenant à l'utilisation pour l'application de pellicules et de revêtements à haute résistance à la chaleur, caractérisé en ce qu'il consiste en :

a) des polyamide-imides à haut poids moléculaire à motifs de structure répétés de formule générale :

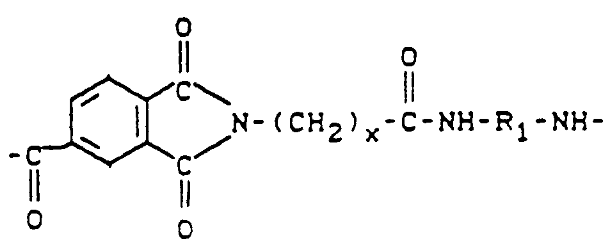

dans laquelle
$R_1$ représente un radical alkylène, cycloalkylène, ou un radical arylène contenant éventuellement des ponts méthylène, tous ces radicaux pouvant être substitués par des groupes alkyle ou des halogènes et
x est un nombre entier allant de 2 à 12,
b) des composés organiques contenant (i) des groupes carbodiimide et/ou des groupes urétonimine et (ii) des groupes isocyanate bloqués par réaction avec un agent bloquant monofonctionnel
et le cas échéant
c) d'autres produits auxiliaires et additifs,
à raison de 1 à 100 parties en poids du composant b) pour 100 parties en poids du composant a).

**2.** Liant pour émaux selon la revendication 1, caractérisé en ce que le composant a) est un polyamide-imide à motifs de structure répétés de formule générale donnée dans la revendication 1, dans laquelle : $R_1$ représente un radical hydrocarboné aromatique divalent portant éventuellement des substituants méthyle et/ou contenant des ponts méthylène, avec 6 à 15 atomes de carbone au total et x est égal à 5.

**3.** Liants selon les revendications 1 et 2, caractérisés en ce que le composant b) contient 0 à 25 % en poids du groupes carbodiimide (exprimé en $-N=C=N-$), 0 à 30 % en poids de groupes urétonimine (exprimé en motifs de structure de formule brute $C_2N_3O$), la somme des groupes carbodiimide et urétonimine (exprimée par convention en $-N=C=N-$) va de 0,5 à 25 % en poids, et la teneur en groupes isocyanate bloqués (exprimée en NCO) est de 1 à 25 % en poids.

**4.** Utilisation des liants selon les revendications 1 à 3 dans des produits de revêtement pour supports résistant à la chaleur.

**5.** Utilisation selon la revendication 4 dans des émaux pour fils métalliques.

**6.** Procédé pour l'application d'émaux sur des fils métalliques par revêtement de ces derniers à l'aide d'un émail pour fils contenant des liants, des solvants inertes et le cas échéant les produits auxiliaires et additifs usuels dans l'industrie des produits de revêtement, avec durcissement subséquent du revêtement à des températures supérieures à 80 ° C, caractérisé en ce que l'on utilise à cet effet des produits de revêtement contenant, en tant que liants, des liants selon les revendications 1 à 3.